# EUROPÄISCHE PATENTSCHRIFT

(11) **EP 3 802 251 B1**
(45) Veröffentlichungstag und Bekanntmachung des Hinweises auf die Patenterteilung: **08.02.2023**
(21) Anmeldenummer: 19724104.5
(22) Anmeldetag: 30.04.2019
(51) Int. Cl.: B60T 17/00, B60T 17/02, B60T 17/22

(54) **LUFTAUFBEREITUNGSEINRICHTUNG EINES FAHRZEUGS**
COMPRESSED AIR SYSTEM OF A VEHICLE
SYSTEM D`AIR COMPRIMEE POUR VEHICULE

(30) Priorität: 24.05.2018 DE 102018112521
(43) Veröffentlichungstag der Anmeldung: 14.04.2021
(73) Patentinhaber: KNORR-BREMSE Systeme für Nutzfahrzeuge GmbH, 80809 München (DE)
(72) Erfinder: MICHALSKI, Max, 85579 Neubiberg (DE); SCHNITTGER, Karsten, 80935 München (DE)
(86) Internationale Anmeldenummer: PCT/EP2019/061091
(87) Internationale Veröffentlichungsnummer: WO 2019/223971

(56) Entgegenhaltungen:
- WO-A1-2016/169977
- DE-A1-102010 018 949
- DE-A1-102013 015 157
- US-A- 5 795 134

## Beschreibung

Die vorliegende Erfindung betrifft eine Luftaufbereitungseinrichtung mit elektronischer Steuereinheit zur Versorgung mindestens eines Verbraucherkreises eines Fahrzeuges, vorzugsweise Nutzfahrzeuges, mit getrockneter Systemluft, umfassend eine Lufttrocknereinheit zur Trocknung von durch einen pneumatisch schaltbaren Kompressor erzeugter Druckluft, die über mindestens ein Überströmventil den mindestens einen Verbraucherkreis mit getrockneter Druckluft versorgt, wobei ein an der Steuereinheit angeschlossenes elektromagnetisches Regenerationsventil, das zur Regeneration der Lufttrocknereinheit getrocknete Druckluft entlang eines Regenerationspfades durch die Lufttrocknereinheit rückleitet, ein an der Steuereinheit angeschlossenes elektromagnetisches Kompressorsteuerventil zum Ein- und Ausschalten des pneumatisch schaltbaren Kompressors über einen pneumatischen Schaltanschluss, basierend auf einem von mindestens einen Drucksensor ermittelten und als Eingangssignal der elektronischen Steuereinheit zugeleiteten Systemdruckmesswert, sowie ein pneumatisch vorgesteuertes weiteres Kompressorsteuerventil.

Ferner betrifft die Erfindung auch ein Nutzfahrzeug mit mindestens einem pneumatischen Verbraucherkreis, beispielsweise einem Betriebsbremskreis, dessen Druckluftversorgung über eine derartige Luftaufbereitungseinrichtung durchgeführt wird.

Das Einsatzgebiet der Erfindung erstreckt sich vornehmlich auf Nutzfahrzeuge, welche gewöhnlich mehrere pneumatische Verbraucherkreise aufweisen, um ein pneumatisch betriebenes Bremssystem - vorzugsweise umfassend eine Betriebs- und Parkbremse - sowie ein Luftfedersystem zur Fahrzeugfederung und dergleichen zu betreiben. Zur Druckluftversorgung der Verbraucherkreise ist getrocknete Druckluft bereitzustellen, welche mittels eines Kompressors generiert und anschließend mit einer Luftaufbereitungseinrichtung der hier interessierenden Art getrocknet wird, ehe die getrocknete Druckluft in Speicherbehältern zur weiteren Verwendung bereitgestellt wird. Moderne elektronische Luftaufbereitungseinrichtungen - sogenannte EAC's - weisen eine elektronische Steuereinheit auf, welche Druckmesssignale einer integrierten Sensorik, insbesondere auch zum Messen des erzeugten Systemdrucks, verarbeitet, um hierüber eine Ansteuerung von elektromagnetischen Mehrwegeventilen vorzunehmen, welche nach Maßgabe verschiedener Betriebsmodi den Druckluftpfad für eine Förderphase sowie auch den Druckluftpfad für eine Regenerationsphase innerhalb der Luftaufbereitungseinrichtung steuern. Die vom Kompressor geförderte öl- und wasserhaltige Druckluft wird vom EAC gefiltert und gereinigt.

In der Förderphase wird die vom Kompressor erzeugte Druckluft über eine Lufttrocknereinheit getrocknet und anschließend den verschiedenen Verbraucherkreisen über Überströmventile, beispielsweise in Form eines Mehrkreis-Schutzventils, zur Verfügung gestellt.

In der Regenerationsphase strömt ein Teil der getrockneten Druckluft über einen Regenerationspfad der Luftaufbereitungseinrichtung zurück durch die Lufttrocknereinheit, um dem hierin enthaltenen Trocknungsgranulat die Feuchtigkeit zu entziehen, so dass die Lufttrocknereinheit für eine nachfolgende Förderphase wieder regeneriert ist.

Aus der DE 10 2011 011 628 A1 geht eine gattungsgemäße Luftaufbereitungseinrichtung hervor, welche komprimierte Druckluft mit dem benötigten Druckniveau und in der richtigen Befüllreihenfolge verschiedenen Verbraucherkreisen eines Nutzfahrzeugs zuteilt. Hierzu schaltet die elektronische Luftaufbereitungseinrichtung einen pneumatisch schaltbaren Kompressor in Abhängigkeit des Systemdrucks ein oder aus. Der Systemdruck wird über einen elektrischen Drucksensor gemessen. Wird ein oberer Schwellwert für den Systemdruck - Abschaltdruck genannt - erreicht, dann wird der Kompressor pneumatisch über einen Kompressorsteueranschluss der Luftaufbereitungseinrichtung ausgeschaltet, indem der Kompressorsteueranschluss mit Druckluft beaufschlagt wird. Wird nach einem Luftverbrauch ein unterer Schwellwert für den Systemdruck - Einschaltdruck genannt - erreicht, dann wird der Kompressor eingeschaltet, indem der Kompressorsteueranschluss der Luftaufbereitungseinrichtung entlüftet wird. In der nachfolgenden Förderphase steigt der Systemdruck wieder an, bis der Abschaltdruck erreicht ist. Bei Bedarf oder in festgesetzten Zeitabständen wird ein Teil der erzeugten und getrockneten Druckluft im Rahmen einer vorstehend beschriebenen Regenerationsphase zur Entfeuchtung der Lufttrocknereinheit genutzt. Zum Ein- und Ausschalten des Kompressors sowie zur Einleitung einer Regenerationsphase sind im Rahmen der Luftaufbereitungseinrichtung zugeordnete elektromagnetische Mehrwegeventile vorgesehen, welche durch eine elektronische Steuereinheit unter Rückgriff auf die Sensorsignale betrieben werden. Im Defektfall werden von der elektronischen Luftaufbereitungseinrichtung die einzelnen Verbraucherkreise gegeneinander abgesichert, so dass zur Abbremsung des Nutzfahrzeuges eine ausreichende Hilfsbremswirkung zur Verfügung steht. Wie üblich, dominiert auch bei diesem Stand der Technik die elekrische Ansteuerung die pneumatische Ansteuerung der Mehrwegeventile. So beinhaltet die Lösung, dass im elektrischen Backup noch eine vollständige Funktion der Luftaufbereitung zur Verfügung steht. Diese kommt aber dort nicht zur Wirkung, wo wegen fehlerhafter Sensorwerte im gültigen Bereich die elektronische Steuerung nicht abschaltet, also in den Backup-Mode geht.

Es ist daher eine geänderte Sicherheitsbetrachtung für elektronische und elektromechanische Geräte ratsam. Bei herkömmlichen elektronischen Luftaufbereitungseinrichtungen kann beispielsweise infolge einer Leckage der reale Systemdruck derart stark abfallen, dass eine Hilfsbremswirkung für das Nutzfahrzeug nicht mehr unter allen Umständen gewährleistet werden kann. In einem spezifischen Fehlerszenario kann der Fall auftreten, dass elektrische Drucksensoren einen falschen, zu hohen Messwert angeben, welcher zwischen dem Einschaltdruck und dem Ausschaltdruck liegt. Da der Messwert jedoch über dem Einschaltdruck liegt, wird der Kompressor nicht aktiviert. Der Systemdruck kann auf ein Niveau absinken, bei dem die Hilfsbremswirkung für das Nutzfahrzeug nicht mehr gewährleistet werden kann. Diese Sensorfehlfunktion hat auch die Folge, dass keine Warnung an den Fahrer des Nutzfahrzeuges über diese potenziell gefährliche Situation ausgegeben werden kann.

Eine weitere gattungsgemäße Luftaufbereitungseinrichtung ist aus der WO 2016/169977 A1 bekannt. Es ist daher die Aufgabe der vorliegenden Erfindung, eine elektronische Luftaufbereitungseinrichtung der gattungsgemäßen Art dahingehend weiter zu verbessern, dass trotz Sensorfehlfunktion die Hilfsbremswirkung für das Fahrzeug nicht beeinträchtigt ist.

Die Aufgabe wird ausgehend von einer Luftaufbereitungseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung an.

Die Erfindung schließt die technische Lehre ein, dass eine dem Grundprinzip nach elektronische Luftaufbereitungseinrichtung eine redundante pneumatische Kompressoransteuerung umfasst, bei welcher ein pneumatisch vorgesteuertes weiteres Kompressorsteuerventil vorgesehen ist, das an einem Steuereingang vom Systemdruck oder einem hierzu proportionalen Druck beaufschlagt ist, um nach Abfall des Systemdrucks unter einen tiefer definierten unteren Grenzwert den Kompressor durch Ansteuerung des pneumatischen Schaltanschlusses einzuschalten. Dieses Einschalten über das weitere Kompressorsteuerventil erfolgt dabei redundant zum Einschalten über das von der elektronischen Steuereinheit angesteuerte elektromagnetische Kompressorsteuerventil.

Der Vorteil der erfindungsgemäßen Lösung liegt insbesondere darin, dass dank der redundanten pneumatischen Kompressoransteuerung ein Einschalten des Kompressors auch dann bewirkt wird, wenn eine Sensorfehlfunktion vorliegt, die dazu führt, dass die elektronische Steuereinheit einen unterkritischen Systemdruckzustand nicht mehr zu erkennen vermag. Ein Wiederauffüllen des Systemdrucks wird durch die pneumatische Redundanz garantiert, so dass die Hilfsbremswirkung für das Nutzfahrzeug in dem hier herausgestellten Fehlerfall erhalten bleibt.

Gemäß einer bevorzugten Ausführungsform der Erfindung wird vorgeschlagen, dass sich der Kompressor in der Realisierung einer inversen Schaltung dann einschaltet, wenn dessen pneumatischer Schaltanschluss entlüftet ist, und dass sich der Kompressor dann ausschaltet, wenn dessen pneumatischer Schaltanschluss druckbeaufschlagt ist. Zu diesem Zweck ist das weitere Kompressorsteuerventil vorzugsweise als ein pneumatisch vorgesteuertes 2/2-Wegeventil in NO-Bauform (NO = Normal Open) ausgebildet, welches sich in Sperrstellung befindet, solange der Systemdruck einen unteren Schwellwert nicht erreicht hat. Die Einstellung des Schwellwerts erfolgt über eine Justierung der Federkraft, welche dem pneumatischen Steuerdruck entgegenwirkt und bei den hier interessierenden monostabilen Mehrwegeventilen hinlänglich bekannt ist.

Im Rahmen der bevorzugten Ausführungsform wird vorgeschlagen, dass das weitere Kompressorsteuerventil zum Einschalten des Kompressors den pneumatischen Schaltanschluss für den Kompressor mit einem Entlüftungsanschluss an der Luftaufbereitungseinrichtung verbindet. Hierdurch sinkt der Schaltdruck für den Kompressor auf das Atmosphärendruckniveau, was ein Einschalten des Kompressors zur Erhöhung des Systemdrucks führt. Umgekehrt ist vorgesehen, dass das weitere Kompressorsteuerventil zum Ausschalten des Kompressors vorzugsweise den pneumatischen Schaltanschluss für den Kompressor gegenüber dem Entlüftungsanschluss absperrt. Hierdurch wirkt der steigende Systemdruck auf den Schaltanschluss für den Kompressor, bis dessen Druckniveau das Ausschalten des Kompressors gestattet.

Im Rahmen des normalen Betriebs der elektronischen Luftaufbereitungseinrichtung, welcher über die elektronische Steuereinheit erfolgt, wird oberhalb des oberen Schwellwerts des Systemdrucks auch durch das elektropneumatische Wegeventil zur Kompressoransteuerung die Verbindung zur Entlüftung abgesperrt. Entsprechend der Regelungsstrategie der elektronischen Luftaufbereitungseinrichtung kann der Kompressor durch Betätigung der entsprechenden elektromagnetischen Mehrwegeventile elektronisch ein- oder ausgeschaltet werden, wenn der Einschaltdruck unterschritten wird bzw. der Abschaltdruck erreicht wird.

In einem Fehlerfall mit stark sinkendem Systemdruck, aber korrekt arbeitenden elektrischen Drucksensoren, wird ein Druckverlust erkannt und die elektronische Steuereinheit schaltet über das zugeordnete elektromagnetische Wegeventil den Kompressor ein. Außerdem erhält der Fahrer des Nutzfahrzeuges eine Warnmeldung über den zu geringen Bremsdruck. In dem vorstehend dargelegten Fehlerszenario mit falsch messenden Drucksensoren sinkt der Systemdruck jedoch unbemerkt unterhalb des unteren Schwellwerts, bei dem die elektronische Steuereinheit eigentlich ein Einschalten des Kompressors auslösen müsste. In pneumatischer Redundanz schaltet stattdessen jedoch das pneumatisch vorgesteuerte weitere Kompressorsteuerventil in seine Grundposition zurück. Hierdurch wird der pneumatische Steueranschluss des Kompressors entlüftet, so dass der Kompressor trotzdem eingeschaltet wird und infolgedessen den Systemdruck wieder erhöht.

Um eine Schaltkonkurrenz der elektronischen Steuereinheit gegenüber der redundanten pneumatischen Steuerung zu vermeiden, wird gemäß einer die Erfindung verbessernden Maßnahme vorgeschlagen, dass der Schaltdruck des weiteren Kompressorsteuerventils unterhalb des elektrisch über die elektronische Steuereinheit gesteuerten Schaltdrucks zum Einschalten des Kompressors über das elektromagnetische Kompressorsteuerventil liegt, so dass der elektronischen Steuerung automatisch Priorität vor der redundanten pneumatischen Steuerung zukommt.

Neben der Ansteuerung des pneumatisch schaltbaren Kompressors verwirklicht die Luftaufbereitungseinrichtung auch eine Regeneration der Lufttrocknereinheit.

Das Regenerationsventil ist als ein elektromagnetisches Mehrwegeventil ausgebildet, das nach Maßgabe der elektronischen Steuereinheit angesteuert wird, um die Luftaufbereitungseinheit von einem Förderbetrieb in einen Regenerationsbetrieb umzuschalten. Ein im Regenerationspfad angeordnetes Entlüftungsventil verbindet eine eingangsseitige Anschlussleitung des Kompressors mit einem Entlüftungsanschluss, falls sich die Luftaufbereitungseinrichtung im Regenerationsbetrieb befindet, wobei das Entlüftungsventil durch eine Verbindung mit dem pneumatischen Schaltanschluss des Kompressors pneumatisch vorgesteuert ist. Alternativ hierzu kann ein im Regenerationspfad angeordnetes Entlüftungsventil auch eine eingangsseitige Anschlussleitung des Kompressors mit einem Entlüftungsanschluss verbinden, falls sich die Luftaufbereitungseinrichtung im Regenerationsbetrieb befindet, wobei das Entlüftungsventil durch eine Verbindung mit einem Arbeitsanschluss des elektromagnetischen Regenerationsventils pneumatisch vorgesteuert ist. Diese zweite Ausführungsvariante zeichnet sich gegenüber der ersten Ausführungsvariante als energiesparender aus.

Weitere die Erfindung verbessernde Maßnahmen werden nachfolgend gemeinsam mit der Beschreibung eines bevorzugten Ausführungsbeispiels anhand der Figuren näher dargestellt. Es zeigt:
- Fig. 1: ein pneumatisches Schaltschema für eine elektronische Luftaufbereitungseinrichtung in einer ersten Ausführungsform, und
- Fig. 2: ein pneumatisches Schaltschema für eine elektronische Luftaufbereitungseinrichtung in einer zweiten Ausführungsform.

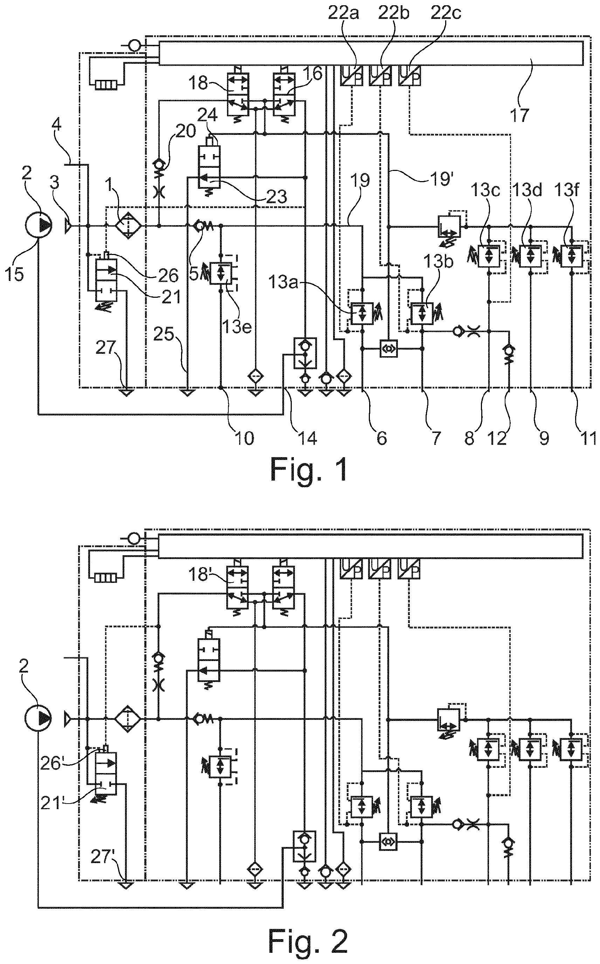

Gemäß Fig. 1 umfasst eine elektronische Luftaufbereitungseinrichtung eine Lufttrocknereinheit 1 zur Trocknung von durch einen pneumatisch schaltbaren Kompressor 2 erzeugter Druckluft. Die vom Kompressor 2 erzeugte Druckluft wird der elektronischen Luftaufbereitungseinrichtung eingangsseitig über einen Kompressoranschluss 3 zugeleitet. Daneben existiert ein paralleler Fremdbefüllungsanschluss 4, welcher im Falle einer Wartung mit stationär erzeugter Druckluft beaufschlagt werden kann, so dass in diesem Fall der Kompressor 2 nicht in Betrieb genommen werden muss.

Die von der Lufttrocknereinheit 1 getrocknete Druckluft wird über ein Rückschlagventil 5 als Systemdruck mehreren Verbraucherkreisen zugeführt. Als Verbraucherkreise gelten in diesem Ausführungsbeispiel eine Betriebsbremse für die Vorderachse eines Nutzfahrzeuges, welche über den Verbraucherkreisanschluss 6 anschließbar ist, eine Betriebsbremse für die Hinterachse eines Nutzfahrzeuges, welche über einen Verbraucherkreisanschluss 7 anschließbar ist, eine Betriebsbremse für einen Anhänger des Nutzfahrzeuges, welche über den Verbraucherkreisanschluss 8 anschließbar ist sowie einen Getriebeanschluss 9, einen Luftfederanschluss 10, einen pneumatischen Hilfsgeräteanschluss 11 sowie einen Parkbremsanschluss 12.

Die vorgenannten Anschlüsse für Verbraucherkreise sind über diverse jeweils zugeordnete Überströmventile 13a bis 13f abgesichert.

Neben den vorstehend beschriebenen Anschlüssen für die Verbraucherkreise weist die elektronische Luftaufbereitungseinrichtung auch einen pneumatischen Schaltanschluss 14 zum Ein- und Ausschalten des Kompressors 2 über dessen pneumatischen Schalteingang 15 auf. Die Ansteuerung des pneumatischen Schaltanschlusses 14 erfolgt über ein elektromagnetisches Kompressorsteuerventil 16, das von einer elektronischen Steuereinheit 17 aus zum Ein- und Ausschalten des Kompressors 2 angesteuert wird. Außerdem dient die elektronische Steuereinheit 17 auch der Ansteuerung eines hieran angeschlossenen elektromagnetischen Regenerationsventils 18, welches zur Regeneration der Lufttrocknereinheit 1 getrocknete Druckluft entlang eines Regenerationspfades durch die Lufttrocknereinheit 1 rückleitet.

Zur Erzeugung getrockneter Druckluft entlang eines Förderpfades gelangt die vom Kompressor 2 erzeugte Druckluft über den Kompressoranschluss 11 zur Lufttrocknereinheit 1. Die Lufttrocknereinheit 1 enthält ein Trockenmittel, welches der Druckluft die Feuchtigkeit entzieht und die getrocknete Druckluft über das Rückschlagventil 5 in eine Systemdruckleitung 19 einleitet, von welcher aus die verschiedenen Verbraucherkreise mit getrockneter Druckluft versorgt werden. Ein Teil der Verbraucherkreise wird dabei über ein Höchstdruck-Umschaltventil 20 beaufschlagt.

Ist der Kompressor 2 über den pneumatischen Schaltanschluss 14 nach Erreichen eines oberen Druckschwellwerts abgeschaltet, so kann nach Maßgabe der elektronischen Steuereinheit 17 eine Regeneration des sich in der Lufttrocknereinheit 1 befindlichen Trockenmittels erfolgen. Hierfür wird das Regenerationsventil 18 aktiviert, welches von der systemdruckführenden Druckleitung 19' mit getrockneter Druckluft gespeist ist und diese im geschalteten Zustand über ein Rückschlagventil 20 entgegengesetzt der Förderrichtung durch die Lufttrocknereinheit 1 leitet, um das Trockenmittel wieder zu entfeuchten. Die entlang des weiteren Regenerationspfades aus der Trocknereinheit 1 austretende Druckluft wird anschließend über ein umgeschaltetes Entlüftungsventil 21 und einem Entlüftungsanschluss 27 an die Atmosphäre abgeführt.

Dem Kompressorsteuerventil 16 sind mehrere Drucksensoren 22a - 22c zugeordnet, wobei die elektronische Steuereinheit 17 den jeweils nach den Überströmventilen 13a, 13b und 13c anliegenden Systemdruckwert misst und in der Förderphase bei Erreichen eines oberen Schwellwerts das Kompressorsteuerventil 16 zum Ausschalten des Kompressors 2 über den pneumatischen Schaltanschluss 14 aktiviert. Zu diesem Zweck wird der pneumatische Schaltanschluss 14 in der Umschaltstellung des Kompressorsteuerventils 16 mit dem aus der Druckleitung 19' entnommenen Systemdruck beaufschlagt. Zum Ausschalten des Kompressors 2 wird der pneumatische Schaltanschluss 14 entlüftet.

Eine zu dieser elektronischen Kompressoransteuerung redundante pneumatische Kompressoransteuerung bedient sich eines pneumatisch vorgesteuerten Kompressorsteuerventils 23. Ein Steuereingang 24 des Kompressorsteuerventils 23 ist mit der systemdruckführenden Druckleitung 19' verbunden, so dass nach Abfall des Systemdrucks unter einen unteren Grenzwert der Kompressor 2 durch Ansteuerung des pneumatischen Schaltanschlusses 14 eingeschaltet werden kann. Hierzu verbindet das Kompressorsteuerventil 23 in der dargestellten Schaltstellung den pneumatischen Schaltanschluss 14 für den Kompressor 2 mit der Atmosphäre, entlüftet diesen also.

Das Kompressorsteuerventil 23 ist bei diesem Ausführungsbeispiel als pneumatisch vorgesteuertes 2/2-Wegeventil in NO-Bauform ausgebildet und befindet sich in Sperrstellung, solange der Systemdruck einen unteren Schwellwert nicht erreicht. Hierdurch wird das Einschalten des Kompressors 2 bei noch ausreichendem Systemdruck vermieden. Der Schaltdruck des Kompressorsteuerventils 23 liegt unterhalb des Schaltdrucks des elektrisch über die Steuereinheit 17 gesteuerten elektromagnetischen Kompressorsteuerventils 16, so dass der elektronischen Steuerung automatisch Priorität vor der redundanten pneumatischen Steuerung zukommt. Somit fungiert die redundante pneumatische Steuerung lediglich als eine Art Noteinschaltung des Kompressors 2, falls eventuell die Sensorik gemäß des eingangs geschilderten Fehlerszenarios versagt.

Das vorstehend erwähnte im Regenerationspfad der Luftaufbereitungseinrichtung angeordnete Entlüftungsventil 21 wird über dessen Steuereingang 26 durch eine Verbindung mit dem pneumatischen Schaltanschluss 14 des Kompressors 2 durch den hier anliegenden Druck aktiviert. Liegt am pneumatischen Schaltanschluss 14 Druck an, um den Kompressor 2 auszuschalten, so wird das Entlüftungsventil 21 in die geöffnete Schaltstellung überführt, so dass in der Regenerationsphase die die Lufttrocknereinheit 1 verlassende feuchte beladene Druckluft über einen Entlüftungsanschluss 27 an die Atmosphäre abgeführt wird.

Die Fig. 2 illustriert im Unterschied zu dem vorstehend beschriebenen Ausführungsbeispiel eine energiesparende pneumatische Schaltungsanordnung, welche bis auf die Anordnung und Verschaltung des im Regenerationspfad angeordneten Entlüftungsventils 21' identisch mit dem vorstehend beschriebenen Ausführungsbeispiel ist, worauf insoweit vollinhaltlich Bezug genommen wird.

Das Entlüftungsventil 21' verbindet auch hier eine eingangsseitige Anschlussleitung des Kompressors 2 mit dem Entlüftungsanschluss 27, falls sich die Luftaufbereitungseinrichtung im Regenerationsbetrieb befindet. Der Steueranschluss 26' des Entlüftungsventils 21 ` ist jedoch arbeitsanschlussseitig des elektromagnetischen Regenerationsventils 18 angeschlossen. Daher wird das Entlüftungsventil 21 ` nur dann betätigt, wenn die Regenerationsphase eingeleitet wurde, so dass entgegen der vorstehenden Schaltungsvariante Druckluft eingespart wird.

Die erfindungsgemäße Lösung beschränkt sich nicht auf eine Anwendung bei den vorstehend beschriebenen beiden Ausführungsbeispielen. Es sind vielmehr auch Abwandlungen hiervon denkbar, welche vom Schutzbereich der nachfolgenden Ansprüche mit umfasst sind. So ist es beispielsweise auch möglich, dass nur ein einziger Verbraucherkreis eines Fahrzeuges oder andere als die beschriebenen Verbraucherkreise durch die erfindungsgemäße Luftaufbereitungseinrichtung mit getrockneter Druckluft versorgt werden können.

### BEZUGSZEICHENLISTE

- 1: Lufttrocknereinheit
- 2: Kompressor
- 3: Kompressoranschluss
- 4: Fremdbefüllungsanschluss
- 5: Rückschlagventil
- 6: Betriebsbremsanschluss (Vorderachse)
- 7: Betriebsbremsanschluss (Hinterachse)
- 8: Betriebsbremsanschlussanhänger
- 9: Getriebeanschluss
- 10: Luftfederanschluss
- 11: Hilfsanschluss
- 12: Parkbremsanschluss
- 13: Überströmventil
- 14: Schaltanschluss für Kompressor
- 15: Kompressorsteueranschluss
- 16: Kompressorsteuerventil
- 17: elektronische Steuereinheit
- 18: Regenerationsventil
- 19: systemdruckführende Druckleitung
- 20: Rückschlagventil
- 21: Entlüftungsventil
- 22: Drucksensor
- 23: weiteres Kompressorsteuerventil
- 24: Steuereingang
- 25: Entlüftungsanschluss
- 26: Steuereingang
- 27: Entlüftungsanschluss

## Patentansprüche

1. Luftaufbereitungseinrichtung mit elektronischer Steuereinheit (17) zur Versorgung mindestens eines Verbraucherkreises (6 - 12) eines Fahrzeuges mit getrockneter Systemluft, umfassend:
- eine Lufttrocknereinheit (1) zur Trocknung von durch einen pneumatisch schaltbaren Kompressor (2) erzeugter Druckluft, die den mindestens einen Verbraucherkreis (6 - 12) mit getrockneter Druckluft versorgt, wobei
- ein an der Steuereinheit (17) angeschlossenes und elektrisch angesteuertes Kompressorsteuerventil (16) zum Ein- und Ausschalten des pneumatisch schaltbaren Kompressors (2) über einen pneumatischen Schaltanschluss (14), basierend auf einem von mindestens einem Drucksensor (22a - 22c) ermittelten und als Eingangssignal der elektronischen Steuereinheit (17) zugeleiteten Systemdruckmesswert,
wobei zur redundanten pneumatischen Kompressoransteuerung ein pneumatisch vorgesteuertes weiteres Kompressorsteuerventil (23) vorgesehen ist, das an einem Steuereingang (24) vom Systemdruck oder einem hierzu proportionalen Druck beaufschlagt ist, um nach Abfall des Systemdrucks unter einen unteren Grenzwert den Kompressor (2) durch Ansteuerung des pneumatischen Schaltanschlusses (14) einzuschalten,
**dadurch gekennzeichnet, dass,**
- ein an der Steuereinheit (17) angeschlossenes elektromagnetisches Regenerationsventil (18) vorgesehen ist, das zur Regeneration der Lufttrocknereinheit (1) getrocknete Druckluft entlang eines Regenerationspfades durch die Lufttrocknereinheit (1) rückleitet, wobei das Regenerationsventil (18) als ein elektromagnetisches Mehrwegeventil ausgebildet ist, das nach Maßgabe der Steuereinheit (17) angesteuert wird, um die Luftaufbereitungseinheit von einem Förderbetrieb in einen Regenerationsbetrieb umzuschalten,
- ein im Regenerationspfad angeordnetes Entlüftungsventil (21'), dass eine eingangsseitige Anschlussleitung des Kompressors (2) mit einem Entlüftungsanschluss (27') verbindet, falls sich die Luftaufbereitungseinrichtung im Regenerationsbetrieb befindet, wobei das Entlüftungsventil (21') durch eine arbeitsanschlussseitige Verbindung mit dem elektromagnetischen Regenerationsventils (18') pneumatisch vorgesteuert ist.

2. Luftaufbereitungseinrichtung nach Anspruch 1, I
**dadurch gekennzeichnet, dass** sich der Kompressor (2) in Realisierung einer inversen Schaltung dann einschaltet, wenn dessen pneumatischer Schaltanschluss (14) entlüftet ist, und dass sich der Kompressor (2) dann ausschaltet, wenn dessen pneumatischer Schaltanschluss (14) druckbeaufschlagt ist.

3. Luftaufbereitungseinrichtung nach Anspruch 1 oder 2,
**dadurch gekennzeichnet, dass** das weitere Kompressorsteuerventil (23) als ein pneumatisch vorgesteuertes 2/2-Wegevenil in NO-Bauform ausgebildet ist, welches sich in Sperrstellung befindet, solange der Systemdruck einen unteren Schwellwert nicht erreicht hat.

4. Luftaufbereitungseinrichtung nach einem der Ansprüche 1 bis 3,
**dadurch gekennzeichnet, dass** das weitere Kompressorsteuerventil (23) zum Einschalten des Kompressors (2) den pneumatischen Schaltanschluss (14) für den Kompressor (2) mit einem Entlüftungsanschluss (25) verbindet.

5. Luftaufbereitungseinrichtung nach einem der Ansprüche 1 bis 3,
**dadurch gekennzeichnet, dass** das weitere Kompressorsteuerventil (23) zum Ausschalten des Kompressors (2) den pneumatischen Schaltanschluss (14) für den Kompressor (2) gegenüber dem Entlüftungsansschluss (25) absperrt.

6. Luftaufbereitungseinrichtung nach einem der vorstehenden Ansprüche,
**dadurch gekennzeichnet, dass** der Schaltdruck des weiteren Kompessorsteuerventils (23) unterhalb des elektrisch über die Steuereinheit (17) gesteuerten Schaltdrucks zum Einschalten des Komoressors (2) über das elektromagnetische Kompressorsteuerventil (16) liegt, so dass der elektronischen Steuerung automatisch Priorität vor der redundanten pneumatischen Steuerung zukommt.

7. Nutzfahrzeug mit zumindest einem pneumatischen Verbraucherkreis (6 - 12), dessen Druckluftversorgung über eine Luftaufbereitungseinrichtung nach einem der vorstehenden Ansprüche 1 bis 6 erfolgt.

## Claims

1. An air preparation system having an electronic control unit (17) for supplying at least one consumer circuit (6 to 12) of a vehicle with dried system air and comprising:
- an air-drying unit (1) for drying compressed air produced by a pneumatically switchable compressor (2) that supplies the at least one consumer circuit (6 to 12) with dried compressed air,
- an electrically actuated compressor control valve (16) connected to the control unit (17) for switching on and off the pneumatically switchable compressor (2) via a pneumatic switching port (14) based on a system pressure measurement value that is determined by at least one pressure sensor (22a to 22c) and fed as an input signal to the electronic control unit (17),
in order to actuate the pneumatic compressor redundantly there being provided a further, pneumatically pilot-controlled compressor control valve (23) to which the system pressure or a pressure proportional to the system pressure is applied at a control input (24) in order to switch on the compressor (2) by actuating the pneumatic switching port (14) when the system pressure falls below a lower limit value.
**characterised in that**
- there is provided an electromagnetic regeneration valve (18) that is connected to the control unit (17) and that returns dried compressed air along a regeneration path through the air-drying unit (1) in order to regenerate the air-drying unit (1), this regeneration valve (18) taking the form of an electromagnetic multi-way valve that is actuated as instructed by the control unit (17) in order to switch the air preparation unit from delivery mode to regeneration mode,
- a bleed valve (21') arranged in the regeneration path connects a connecting line on the input side of the compressor (2) to a bleed port (27) when the air preparation system is in regeneration mode, the bleed valve (21') being pneumatically pilot-controlled by a connection to the working-port side of the electromagnetic regeneration valve (18').

2. An air preparation system according to claim 1,
**characterised in that** in an implementation of an inverse circuit, the compressor (2) switches on, and so creates an inverse circuit, when its pneumatic switching port (14) is vented, and **in that** the compressor (2) switches off when pressure is applied to this pneumatic switching port (14).

3. An air preparation system according to claim 1 or 2,
**characterised in that** the further compressor control valve (23) takes the form of a pneumatically pilot-controlled 2/2-way valve of NO design that remains in the shut-off position until the system pressure reaches a lower threshold value.

4. An air preparation system according to any one of claims 1 to 3,
**characterised in that** the further compressor control valve (23) for switching on the compressor (2) connects the pneumatic switching port (14) for the compressor (2) to a bleed port (25).

5. An air preparation system according to any one of claims 1 to 3,
**characterised in that** the further compressor control valve (23) for switching off the compressor (2) disconnects the pneumatic switching port (14) for the compressor (2) from the bleed port (25).

6. An air preparation system according to any one of the preceding claims,
**characterised in that** the switching pressure of the further compressor control valve (23) is below the switching pressure controlled electrically via the control unit (17) in order to switch on the compressor (2) via the electromagnetic compressor control valve (16) and that the electronic control function therefore automatically takes priority over the redundant pneumatic control function.

7. A utility vehicle having at least one pneumatic consumer circuit (6 to 12) that is supplied with compressed air via an air preparation system according to any one of the preceding claims 1 to 6.

## Revendications

1. Dispositif de traitement de l'air comprenant une unité (17) électronique de commande de l'alimentation d'au moins un circuit (6 - 12) de consommateur d'un véhicule en air séché de système, comprenant :
- une unité (1) de séchage de l'air pour le séchage de l'air comprimé, qui est produit par un compresseur (2) pouvant être mis en circuit pneumatiquement et qui alimente le au moins un circuit (6 - 12) de consommateur en air comprimé séché, dans lequel
- une soupape (16) de commande de compresseur, raccordée à l'unité (17) de commande et commandée électriquement, de mise en circuit et hors circuit du compresseur (2) pouvant être mis en circuit pneumatiquement par un raccord (14) pneumatique de commutation, sur la base d'une valeur de mesure de la pression du système déterminée par au moins un capteur (22a - 22c) de pression et envoyée comme signal d'entrée à l'unité (17) électronique de commande,
dans lequel, pour la commande pneumatique redondante du compresseur, il est prévu une autre soupape (23) pilotée de commande du compresseur, qui, à une entrée (24) de commande, est soumise à la pression du système ou à une pression, qui y est proportionnelle, afin de mettre, après chute de la pression du système en-dessous d'une valeur limite inférieure, le compresseur (2) en circuit par commande du raccord (14) pneumatique de commutation,
**caractérisé en ce qu'**
- il est prévu une soupape (18) électromagnétique de régénération, qui est raccordée à l'unité (17) de commande et qui, pour la régénération de l'unité (1) de séchage de l'air, retourne de l'air comprimé séché le long d'un chemin de régénération dans l'unité (1) de séchage de l'air, dans lequel la soupape (18) de régénération est sous la forme d'une soupape électromagnétique à plusieurs voies, qui est commandée suivant les indications de l'unité (17) de commande, afin de faire passer l'unité de traitement de l'air d'un fonctionnement en refoulement à un fonctionnement en régénération,
- une soupape (21') de purge, qui est montée dans le chemin de régénération et qui relie à un raccord (27') de purge une ligne de raccordement du compresseur (2) du côté de l'entrée, si le dispositif de traitement de l'air se trouve en fonctionnement de régénération, dans lequel la soupape (21') de purge est pilotée pneumatiquement par une liaison du côté du raccord de travail avec la soupape (18') électromagnétique de régénération.

2. Dispositif de traitement de l'air suivant la revendication 1,
**caractérisé en ce que** le compresseur (2) est mis en circuit, dans la réalisation d'un montage inverse, lorsque son raccord (14) pneumatique de commutation est purgé et **en ce que** le compresseur (2) est mis hors circuit, lorsque son raccord (14) pneumatique de commutation est soumis à une pression.

3. Dispositif de traitement de l'air suivant la revendication 1 ou 2,
**caractérisé en ce que** l'autre soupape (23) de commande du compresseur est constituée comme une soupape à 2/2 voies pilotée pneumatiquement en mode de construction NO, qui se trouve en position d'arrêt, tant que la pression du système n'a pas atteint une valeur de seuil inférieure.

4. Dispositif de traitement de l'air suivant l'une des revendications 1 à 3,
**caractérisé en ce que** l'autre soupape (23) de commande du compresseur met, pour la mise en circuit du compresseur (2), le raccord (14) pneumatique de commutation du compresseur (2) en communication avec un raccord (25) de purge.

5. Dispositif de traitement de l'air suivant l'une des revendications 1 à 3,
**caractérisé en ce que** l'autre soupape (23) de commande du compresseur interrompt, pour la mise hors circuit du compresseur (2), la communication du raccord (14) pneumatique de commutation du compresseur (2) avec le raccord (25) de purge.

6. Dispositif de traitement de l'air suivant l'une des revendications précédentes,
**caractérisé en ce que** la pression de mise en circuit de l'autre soupape (23) de commande du compresseur est en-dessous de la pression de commutation, commandée électriquement par l'unité (17) de commande, pour la mise en circuit du compresseur (2) par la soupape (16) électromagnétique de commande du compresseur, de sorte que la commande électronique a automatiquement priorité sur la commande pneumatique redondante.

7. Véhicule utilitaire comprenant au moins un circuit (6 - 12) de consommateur pneumatique, dont l'alimentation en air comprimé s'effectue par un dispositif de traitement de l'air suivant l'une des revendications 1 à 6 précédentes.
